# FASCICULE DE BREVET EUROPEEN

(11) **EP 1 813 955 B1**
(45) Date de publication et mention de la délivrance du brevet: **20.03.2013**
(21) Numéro de dépôt: 06300041.8
(22) Date de dépôt: 19.01.2006
(51) Int. Cl.: G01S 3/28, G05D 1/10, B64G 1/24

(54) **Dispositif de contrôle de position(s) relative(s) par mesures de puissance du signal, pour un engin spatial d'un groupe d'engins spatiaux en formation**
Vorrichtung zur Kontrolle der relativen Position bzw. der relativen Positionen mittels Messungen der Signalleistung in einem Raumflugkörper in einer Gruppe von in Formation fliegenden Raumflugkörpern
Device controlling relative position(s) using signal power measurements for use by a spacecraft in a group of spacecraft in formation

(43) Date de publication de la demande: 01.08.2007
(73) Titulaire: Thales, 92200 Neuilly-sur-Seine (FR)
(72) Inventeur: Frenkiel, Roland, 06156 Cannes La Bocca Cedex (FR); Mehlen, Christian, 06156 Cannes La Bocca Cedex (FR)
(74) Mandataire: Esselin, Sophie

(56) Documents cités:
- EP-A- 0 432 294
- US-A- 4 929 958
- US-A- 6 072 433
- HILLAND D H ET AL: "Satellite threat warning and attack reporting" AEROSPACE CONFERENCE, 1998 IEEE SNOWMASS AT ASPEN, CO, USA 21-28 MARCH 1998, NEW YORK, NY, USA,IEEE, US, vol. 2, 21 mars 1998 (1998-03-21), pages 207-217, XP010287133 ISBN: 0-7803-4311-5

## Description

L'invention concerne les groupes d'engins spatiaux, comme par exemple des satellites, destinés à se déplacer en formation pour assurer collectivement une mission, et plus précisément le contrôle des positions relatives de ces engins spatiaux les uns par rapport aux autres.

Comme le sait l'homme de l'art, certains groupes d'engins spatiaux, comme par exemple des satellites, doivent être positionnés les uns par rapport aux autres avec une certaine précision afin d'assurer collectivement une mission. Ce positionnement doit se faire au début de la mission, par exemple lors du placement en orbite des satellites. Mais, il peut également se faire en cours de mission, soit pour effectuer une reconfiguration partielle ou totale du groupe, soit pour pallier une défaillance technique (ou une panne d'équipement) de l'un au moins des engins spatiaux.

Afin de permettre un tel positionnement, il a été proposé d'équiper chaque engin spatial (ou au moins ceux qui revêtent la plus grande importance dans le cadre de la mission) d'un dispositif de contrôle comportant au moins, d'une première part, des antennes d'émission/réception, éventuellement complétées par des antennes de réception, implantées sur des faces d'orientations différentes de l'engin spatial et chargés d'émettre/recevoir des signaux radiofréquences (RF), d'une deuxième part, un « senseur RF » comprenant notamment des premiers moyens de mesure chargés d'estimer des différences de marche de signaux reçus entre antennes, et d'une troisième part, des moyens de traitement chargés d'estimer les directions de transmission des signaux qui sont émis par les autres engins spatiaux du groupe (généralement appelées « axes à vue »), à partir des puissances des signaux reçus.

Un tel dispositif de contrôle peut également comprendre des seconds moyens de mesure chargés d'estimer chaque distance séparant leur engin spatial de l'un des autres engins spatiaux du groupe à partir des signaux reçus par les antennes et de signaux auxiliaires transmis par les autres engins spatiaux du groupe et représentatifs des distances qui les séparent respectivement de leur engin spatial. Dans ce cas, les moyens de traitement peuvent déterminer les positions relatives des engins spatiaux du groupe par rapport à un référentiel choisi, à partir des distances estimées et des axes à vue estimés.

Enfin, si le dispositif de contrôle comporte des moyens d'analyse, il peut détecter les risques de collision entre engins spatiaux à partir des positions relatives déterminées, voire même proposer des manoeuvres d'évitement de son engin spatial en fonction de ces positions relatives ainsi qu'éventuellement reconfigurer toute la formation une fois les pannes et les risques de collision écartés.

Lorsque les antennes sont implantées dans des endroits bien choisis (par exemple limitant les trajets multiples) et que les premiers moyens de mesure mettent en oeuvre une méthode robuste de lever d'ambiguïté sur les mesures de différence de marche, il est possible d'obtenir des différences de marche de l'ordre de quelques millimètres, et donc des directions de transmission ayant une précision de l'ordre du degré.

Pour que le dispositif de contrôle puisse fonctionner dans toutes les directions et donc déterminer des positions relatives quelconques, il faut que chaque engin spatial soit équipé sur plusieurs faces de triplets d'antennes (dont une d'émission/réception et deux de réception). Or, d'une première part, l'installation des antennes sur les engins spatiaux est une tâche difficile, d'une deuxième part, le nombre élevé d'antennes complexifie le dispositif de contrôle, et d'une troisième part, le lever d'ambiguïté sur les différences de marche est un processus complexe qui est difficilement compatible avec la robustesse et le temps de réaction nécessaires en matière de détection de collision.

Il est certes possible d'utiliser d'autres techniques d'estimation de positions relatives quelconques d'engins spatiaux, comme par exemple le LIDAR ou le RADAR, mais ces techniques sont soit coûteuses et compliquées, soit difficiles à implanter dans des engins spatiaux, en particulier lorsqu'il s'agit de satellites.

Il est également possible de mettre en oeuvre une technique d'estimation de positions relatives quelconques à base de GPS relatif (« Global Positioning System » - positionnement par satellites). Mais cette solution n'est pas toujours adaptée aux missions de vol en formation soit parce que l'altitude de la mission est trop élevée par rapport à l'altitude de la constellation GPS, soit parce qu'un moyen de positionnement supplémentaire ou indépendant est requis. Le document US-A-6 072 433 propose un système de localisation autonome en intégrant un module d'émission de signal GPS dans chaque récepteur des engins spatiaux. Cependant cette technique nécessite une diversité d'axes d'observation suffisante et donc un nombre d'engins spatiaux importants. Lors d'un mode de fonctionnement en urgence tel que l'anti-collision, l'observation est trop faible pour permettre de lever l'ambiguïté sur la porteuse.

Aucune solution connue n'apportant une entière satisfaction, l'invention a donc pour but d'améliorer la situation.

Elle propose à cet effet un dispositif de contrôle, pour un engin spatial d'un groupe d'engins spatiaux destiné à se déplacer selon une formation choisie, comprenant, d'une part, un ensemble d'au moins trois antennes d'émission/réception destinées à être implantées sur au moins trois faces d'orientations différentes de l'engin spatial et capables d'émottre/recevoir des signaux radiofréquences, et d'autre part, des moyens de traitement chargés d'estimer les directions de transmission des signaux qui sont émis par les autres engins spatiaux du groupe à partir des signaux qui sont reçus par les antennes.

Ce dispositif de contrôle se caractérise par le fait :
- qu'il comprend des moyens de contrôle (MC) agencés pour attribuer, à chaque antenne d'émission/réception, des tranches d'émission différentes et des tranches de réception différentes suivant un schéma de répartition temporelle dans lequel les antennes n'émettent pas simultanément,
- et qu'il comprend, d'une part, des premiers moyens de mesure chargés de déterminer la puissance des signaux qui sont reçus par chacune des antennes et de délivrer des ensembles de (mesures de) puissances, associés chacun à l'un des autres engins spatiaux du groupe, et d'autre part, des moyens de mémorisation chargés de stocker des ensembles de données cartographiques, représentatifs chacun des puissances des signaux reçus par chacune des antennes en fonction de directions de transmission choisies, et
- que ses moyens de traitement sont chargés de comparer chaque ensemble de puissances (délivré par les premiers moyens de mesure) aux ensembles de données cartographiques stockés afin d'estimer chaque direction de transmission des signaux émis par les autres engins spatiaux du groupe par rapport à un référentiel attaché à leur engin spatial.

Le dispositif selon l'invention peut comporter d'autres caractéristiques qui peuvent être prises séparément ou en combinaison, et notamment :
- ses premiers moyens de mesure peuvent être chargés d'effectuer des mesures de rapport signal à bruit (S/B) pour chacun des signaux reçus afin de déterminer leur puissance ;
- il peut comprendre des moyens de contrôle chargés, en cas d'attribution d'une tranche temporelle d'émission et d'une tranche temporelle de réception (complémentaires entre elles) à chaque engin spatial du groupe, conformément à un schéma choisi, de découper les tranches temporelles d'émission et de réception attribuées à leur engin spatial en des nombres de sous-tranches d'émission et de sous-tranches de réception chacun égaux au nombre d'antennes d'émission/réception de leur engin spatial, et d'attribuer une sous-tranche d'émission à chacune des antennes d'émission/réception selon un premier ordonnancement choisi et une sous-tranche de réception à chacune des antennes d'émission/réception selon un second ordonnancement choisi. Chaque antenne d'émission/réception est alors autorisée à émettre pendant la sous-tranche d'émission qui lui a été attribuée et à recevoir pendant la sous-tranche de réception qui lui a été attribuée. Par ailleurs, chaque ensemble de puissances (délivré par les premiers moyens de mesure) porte sur des signaux reçus par les antennes d'émission/réception pendant leurs sous-tranches de réception respectives ;
   ➢ les moyens de contrôle peuvent être chargés de faire varier le premier ordonnancement choisi et/ou le second ordonnancement choisi ;
- il peut comprendre des seconds moyens de mesure chargés d'estimer chaque distance séparant leur engin spatial de l'un des autres engins spatiaux du groupe à partir au moins des signaux reçus par chacune des antennes. Dans ce cas, ses moyens de traitement peuvent être chargés de déterminer les positions relatives des engins spatiaux du groupe par rapport à un référentiel choisi, à partir des distances estimées et des directions de transmission de signaux estimées ;
   ➢ ses seconds moyens de mesure peuvent être chargés d'estimer chaque distance séparant leur engin spatial de l'un des autres engins spatiaux du groupe à partir des signaux reçus par chacune des antennes et de signaux auxiliaires transmis par les autres engins spatiaux du groupe et représentatifs des mesures de distance correspondantes qu'ils ont effectuées de leur côté ;
- ses moyens de mémorisation peuvent stocker des ensembles de données cartographiques représentatifs de puissances normalisées par rapport à un niveau de référence. Dans ce cas, les moyens de traitement sont chargés d'analyser les (mesures de) puissances de chaque ensemble de puissances délivré par les premiers moyens de mesure afin de déterminer, par exemple, la puissance maximale au sein de chacun d'entre eux (qui devient alors la puissance (ou niveau) de référence de la mesure), et d'appliquer aux signaux reçus (en provenance d'un même engin spatial), pendant une durée choisie, un gain qui est choisi de manière à normaliser les puissances des signaux reçus par rapport à cette puissance (ou ce niveau) de référence ;
   ➢ il peut comprendre des moyens d'analyse chargés de détecter des risques de collision à partir des positions relatives des engins spatiaux du groupe ;
      - les moyens d'analyse peuvent être chargés, en cas de détection d'un risque de collision, de déterminer une manoeuvre d'évitement pour leur engin spatial en fonction des positions relatives des engins spatiaux du groupe ;
   ➢ il peut comprendre des moyens de contrôle chargés de contrôler le retour à une géométrie nominale de la formation, en partant des conditions géométriques et cinématiques obtenues après une manoeuvre d'évitement de collision et après retour à des conditions saines sur tous les satellites ;
- les antennes d'émission/réception peuvent être chargées d'émettre/recevoir des signaux radiofréquences qui se présentent sous la forme d'une porteuse modulée par des codes pseudo-aléatoires choisis ;
- les antennes d'émission/réception peuvent être chargées d'émettre/recevoir des porteuses présentant une fréquence appartenant à une bande de fréquences choisie parmi les bandes S, SHF et EHF.

L'invention propose également un engin spatial, destiné à se déplacer en formation au sein d'un groupe d'engins spatiaux du même type, et comprenant un dispositif de contrôle du type de celui présenté ci-avant.

L'invention est particulièrement bien adaptée, bien que de façon non exclusive, aux engins spatiaux tels que les satellites ou les aéronefs.

D'autres caractéristiques et avantages de l'invention apparaîtront à l'examen de la description détaillée ci-après, et des dessins annexés, sur lesquels :
- la figure 1 illustre de façon très schématique un groupe de trois satellites en formation, comprenant chacun un dispositif de contrôle selon l'invention,
- la figure 2 illustre de façon très schématique et fonctionnelle un exemple de réalisation d'un dispositif de contrôle selon l'invention,
- la figure 3 illustre de façon schématique en représentation polaire un exemple de diagramme de puissance reçue (PM) par une antenne omnidirectionnelle à diagramme hémisphérique en fonction de l'angle d'incidence par rapport à sa normale (Z),
- la figure 4 illustre de façon très schématique un exemple de positionnement de six antennes d'un ensemble d'antennes, sur les faces d'un satellite, ainsi que les principaux paramètres intervenant dans la détermination des coordonnées d'un axe à vue,
- les figures 5A à 5F sont des exemples de diagrammes de puissance reçue respectivement par les six antennes de l'ensemble de la figure 4, en fonction de l'angle φ et lorsque l'angle ψ est égal à 0 (par rapport à l'axe X),
- les figures 6A à 6F sont des exemples de diagrammes de puissance reçue respectivement par les six antennes de l'ensemble de la figure 4, en fonction de l'angle φ et lorsque l'angle Ψ est égal à π/4 (par rapport à l'axe X),
- les figures 7A à 7F sont des exemples de diagrammes de puissance reçue respectivement par les six antennes de l'ensemble de la figure 4, en fonction de l'angle φ et lorsque l'angle Ψ est égal à π/2 (par rapport à l'axe X),
- les figures 8A à 8F sont des exemples de diagrammes de puissance reçue respectivement par les six antennes de l'ensemble de la figure 4, en fonction de l'angle φ et lorsque l'angle ψ est égal à π (par rapport à l'axe X).

Les dessins annexés pourront non seulement servir à compléter l'invention, mais aussi contribuer à sa définition, le cas échéant.

L'invention a pour objet de permettre la détermination, par un dispositif de contrôle implanté dans un engin spatial d'un groupe d'engins spatiaux se déplaçant en formation, d'axes à vue, ainsi qu'éventuellement de positions relatives d'engins spatiaux, voire même la détection de risque de collision, les manoeuvres d'évitement associées, ainsi qu'éventuellement la reconfiguration nominale.

Dans ce qui suit, on considère à titre d'exemple non limitatif que les engins spatiaux du groupe sont des satellites d'observation volant (ou destinés à voler) en formation afin de remplir une mission d'observation spatiale ou terrestre.

Mais, l'invention n'est pas limitée à ce type d'engin spatial. Elle concerne en effet tous les engins spatiaux destinés à voler en formation selon une configuration choisie (éventuellement modifiable).

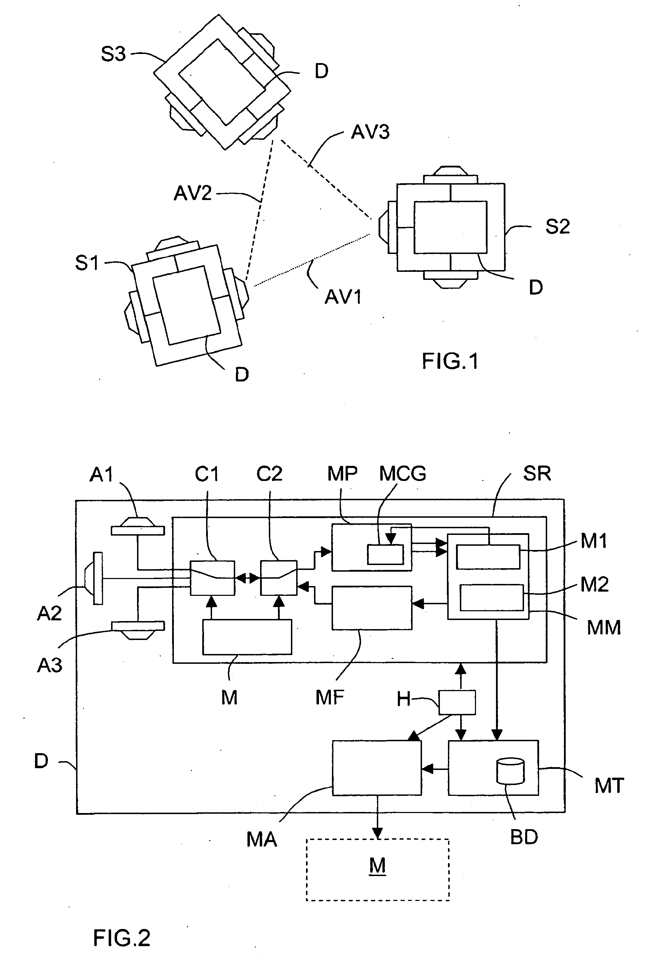

On se réfère tout d'abord aux figures 1 et 2 pour présenter un groupe d'engins spatiaux (satellites) auquel peut s'appliquer l'invention.

Sur la figure 1 se trouve représenté un groupe de trois satellites Si (i= 1 à 3) volant en formation. Il est important de noter que l'invention n'est pas limitée aux groupes comportant trois engins spatiaux. Elle concerne en effet tout groupe dès lors qu'il comprend au moins deux engins spatiaux.

Au sein d'un tel groupe, l'un au moins des satellites Si (S1 à S3) comporte un dispositif de contrôle D selon l'invention. Mais il est avantageux que chaque satellite d'un groupe (ou d'une formation) dispose de son propre dispositif D.

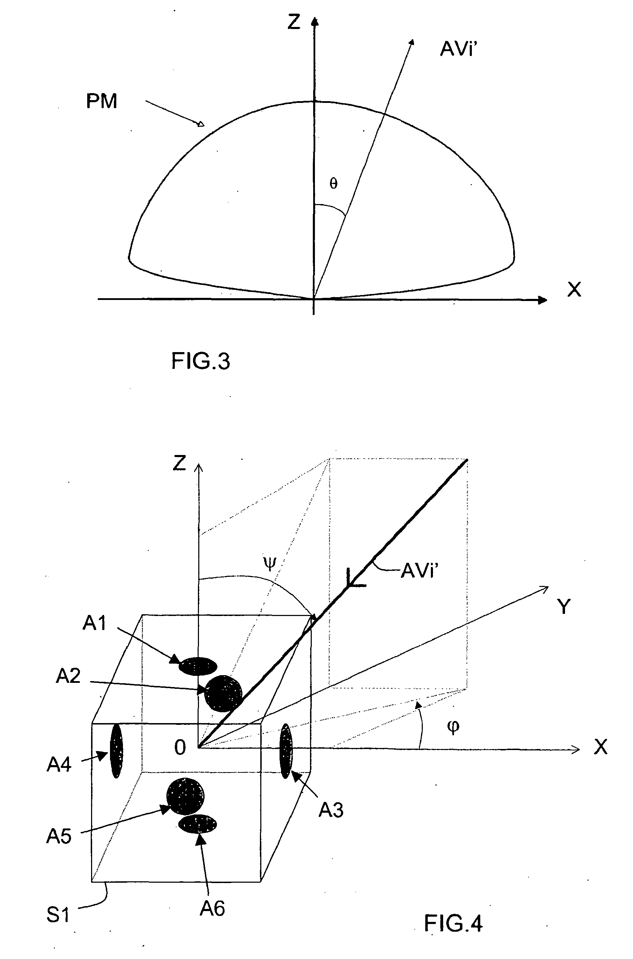

Un dispositif de contrôle D, selon l'invention, comprend au moins un ensemble constitué d'au moins trois antennes d'émission/réception Aj implantées en des endroits choisis sur au moins trois faces d'orientations différentes du satellite Si qu'il équipe. Dans l'exemple illustré sur les figures 1 et 2, chaque dispositif D ne comporte que trois antennes Aj (j = 1 à 3). Mais, un ensemble peut comporter plus de trois antennes. C'est notamment le cas de l'ensemble illustré sur la figure 4, lequel comporte six antennes (j = 1 à 6) implantées sur les six faces d'un satellite S1. Par exemple, chaque antenne Aj d'un ensemble est implantée sensiblement au centre d'une face de satellite Si. Mais, cela n'est pas obligatoire.

Chaque antenne Aj est capable d'émettre et recevoir des signaux radiofréquences (RF) présentant une fréquence f1 choisie.

Ces signaux radiofréquences se présentent de préférence sous la forme de porteuses modulées par des codes pseudo-aléatoires choisis.

La fréquence f1 appartient de préférence à la bande S. Mais, cela n'est pas obligatoire. Elle peut en effet également appartenir à la bande SHF ou EHF.

On considère ci-après que la fréquence f1 appartient à la bande S. Par exemple, f1 = 2,1 GHz.

Un dispositif de contrôle D peut éventuellement comprendre au moins une antenne complémentaire implantée sur au moins l'une des faces de son satellite Si et dédiée exclusivement à la réception des signaux RF présentant la fréquence f1. On peut par exemple envisager qu'une (ou plusieurs) face(s) d'un satellite Si soi(en)t équipée(s) d'une antenne d'émission/réception Aj et d'une ou deux antennes de réception complémentaires.

Selon l'invention, chaque dispositif de contrôle D comprend également, au moins, un module de mesure MM, des moyens de mémorisation BD et un module de traitement MT.

Le premier module de mesure MM comprend au moins un premier sous-module de mesure M1 chargé de déterminer la puissance des signaux qui sont reçus par chacune des antennes Aj (et les éventuelles antennes complémentaires) afin de délivrer des ensembles de données représentatives de ces mesures de puissances, chaque ensemble étant associé à l'un des autres satellites Si' du groupe auquel appartient son propre satellite Si.

Par exemple, le premier module de mesure MM peut déterminer la puissance de chaque signal reçu par une antenne Aj en effectuant une mesure de son rapport signal à bruit (S/B), ce qui permet de s'affranchir de la valeur exacte du gain d'amplification/atténuation apporté par la chaîne de traitement, sachant que le niveau du bruit est relativement bien connu.

La mesure du rapport signal à bruit (S/B) peut être réalisée au moyen de toute technique connue de l'homme de l'art. Par exemple, on peut mesurer l'énergie dans une bande de fréquences qui contient le signal ainsi que l'énergie dans une bande de fréquences voisine qui ne contient pas le signal.

Si la mission implique une grande dynamique de puissance reçue des différents engins spatiaux (selon que les engins spatiaux sont proches ou éloignés), notamment pour ce qui concerne les mesures de puissance, le dispositif de contrôle D peut comporter un module de contrôle de gain MCG placé en amont du module de mesure MM et couplé à ce dernier. Ce module de contrôle de gain MCG est plus précisément une boucle de contrôle de gain automatique chargée d'atténuer/amplifier le signal de manière à l'amener à un niveau compatible avec celui traité par un étage de conversion analogique/numérique. D'une tranche de temps à l'autre, correspondant à la réception sur une nouvelle antenne ou à la réception d'un autre satellite, le niveau de la puissance reçue peut considérablement varier et entraîne une variation du gain apporté par le module de contrôle de gain MCG. Cette valeur de gain doit être connue par le module de mesures MM, afin d'en tenir compte lors du calcul de la puissance reçue en amont du module MCG. Le module MCG fournit donc au module MM la valeur du gain qu'il a utilisé pour chaque tranche de temps.

Dans ce cas, le premier sous-module de mesure M1 détermine préférentiellement la puissance de chaque signal reçu par une antenne Aj en fonction de la mesure de puissance effectuée sur le signal numérisé et du gain qui lui a été appliqué dans le module de pré-traitement analogique.

Comme cela est schématiquement illustré sur la figure 2, le module de contrôle de gain MCG fait par exemple partie d'un module de pré-traitement analogique/numérique MP chargé de traiter les signaux reçus (notamment via le contrôle de gain) et de les convertir en signaux numériques afin d'alimenter le premier module de mesure MM.

Ce module de pré-traitement analogique/numérique MP est par exemple couplé aux antennes Aj de l'ensemble (ainsi qu'aux éventuelles antennes complémentaires) par l'intermédiaire de premier C1 et second C2 modules d'aiguillage.

Le premier module d'aiguillage C1 assure le couplage avec l'une ou l'autre des antennes en fonction d'instructions provenant du module de contrôle MC sur lequel on reviendra plus loin.

Le second module d'aiguillage C2 est raccordé à une entrée/sortie du premier module d'aiguillage C1 et, d'une part, à l'entrée du module de pré-traitement analogique/numérique MP, et d'autre part, à la sortie d'un module MF de formation de signaux RF (pour la partie transmission des signaux RF destinés aux autres satellites Si'). Il permet donc le fonctionnement du dispositif de contrôle D soit en mode de réception de signaux, soit en mode d'émission de signaux en fonction d'instructions provenant du module de traitement MT.

Le dispositif de contrôle D comporte une horloge H permettant de fournir des signaux d'horloge nécessaires au fonctionnement de certains au moins de ses constituants, et notamment nécessaires au contrôle de la transmission et de la réception.

Les moyens de mémorisation BD sont chargés de stocker des ensembles de données cartographiques qui représentent chacun les puissances prédéterminées et normalisées des signaux reçus par chacune des antennes Aj (et éventuelle(s) antenne(s) complémentaire(s)) en fonction de directions de transmission choisies. La normalisation permet de ne s'intéresser qu'aux rapports de puissances mesurées, qui sont les seuls représentatifs de l'axe à vue, indépendamment de la distance entre satellites. Comme on le verra plus loin, il est important d'effectuer une normalisation identique dans le module de traitement MT, afin de pouvoir comparer les grandeurs tabulées dans les moyens de mémorisation BD avec l'ensemble de mesures faites sur une antenne de l'engin spatial à contrôler.

Les puissances des données cartographiques sont prédéterminées lors d'une analyse cartographique préalable, par exemple au sein d'une chambre d'essai RF de type anéchoïde, ou bien au moyen d'un logiciel de simulation alimenté par un modèle représentant les emplacements respectifs des différentes antennes, leur environnement, et leurs caractéristiques, notamment de rayonnement.

On a représenté schématiquement sur la figure 3, en représentation polaire, un exemple de diagramme de puissance reçue PM par une antenne omnidirectionnelle en fonction de l'angle d'incidence par rapport à sa normale Z.

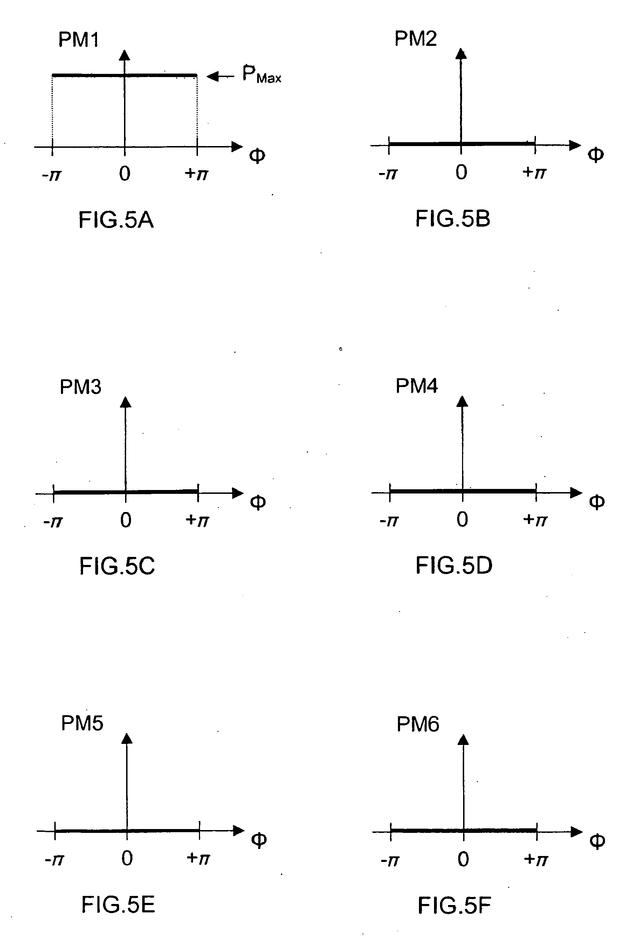

Par ailleurs, on a représenté schématiquement sur les figures 5 à 8 quatre exemples d'ensembles de six diagrammes de puissance reçue PMj (j = 1 à 6) respectivement par les six antennes Aj de l'ensemble d'antennes implanté sur l'exemple de satellite Si illustré sur la figure 4, respectivement pour quatre valeurs différentes de l'angle ψ représentant l'élévation.

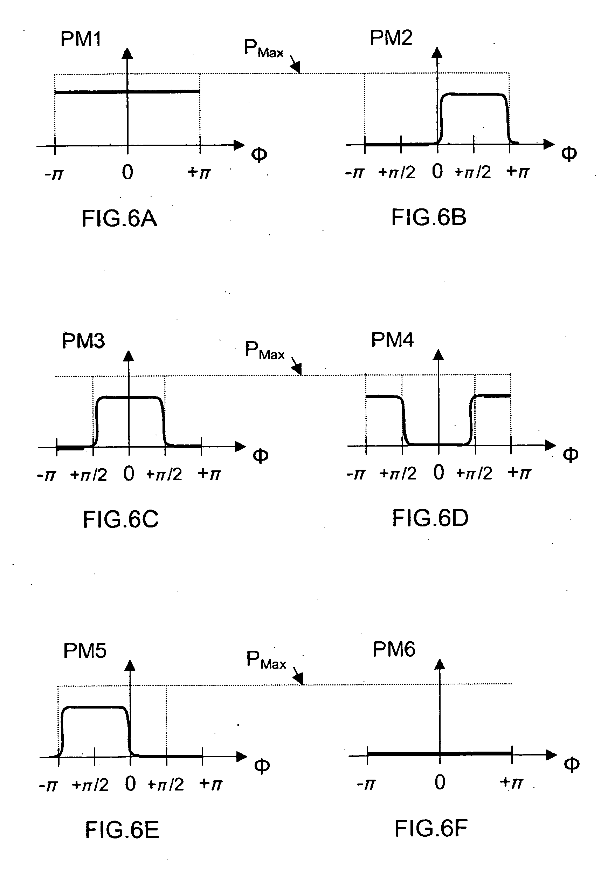

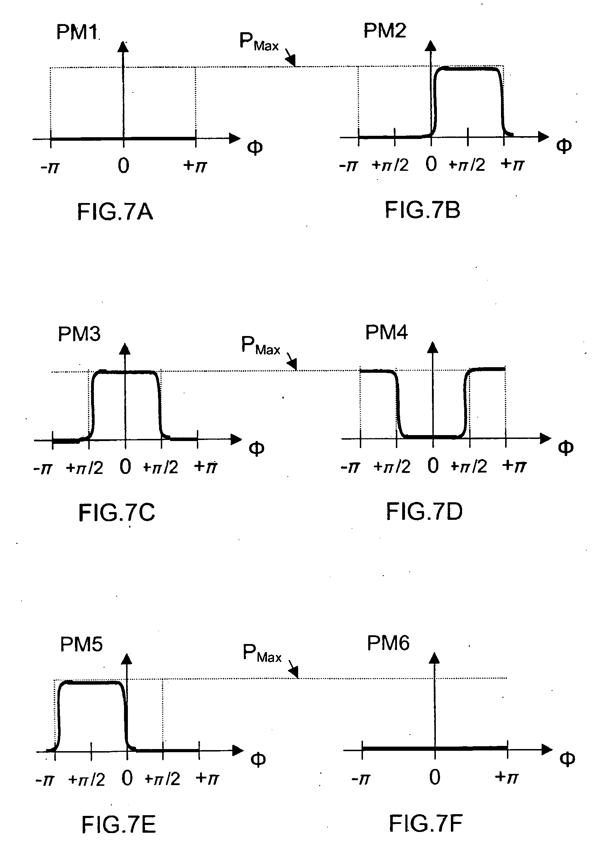

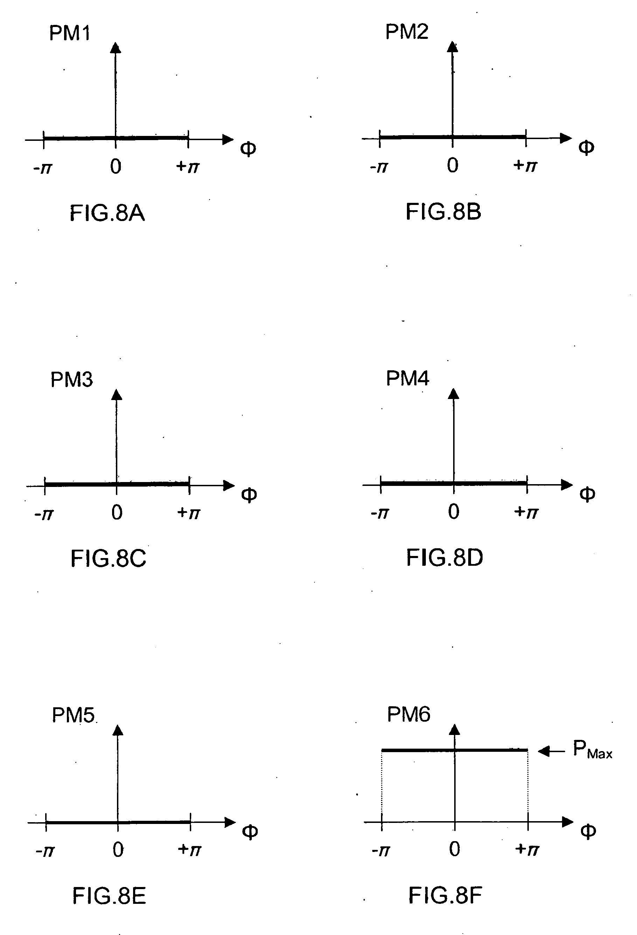

Plus précisément, les figures 5A à 5F illustrent les six diagrammes de puissance reçue (PM1 à PM6) respectivement par les six antennes A1 à A6 en fonction de l'angle φ, représentant l'azimut, et pour un angle ψ égal à 0 par rapport à l'axe X du référentiel (X, Y, Z). Les figures 6A à 6F illustrent les six diagrammes de puissance reçue (PM1 à PM6) respectivement par les six antennes A1 à A6 en fonction de l'angle φ, et pour un angle ψ égal à π/4 par rapport à l'axe X du référentiel (X, Y, Z). Les figures 7A à 7F illustrent les six diagrammes de puissance reçue (PM1 à PM6) respectivement par les six antennes A1 à A6 en fonction de l'angle φ, et pour un angle ψ égal à π/2 par rapport à l'axe X du référentiel (X, Y, Z). Les figures 8A à 8F illustrent les six diagrammes de puissance reçue (PM1 à PM6) respectivement par les six antennes A1 à A6 en fonction de l'angle φ, et pour un angle ψ égal à π par rapport à l'axe X du référentiel (X, Y, Z).

Sur les figures 5 à 8, les ensembles de six diagrammes sont normalisés par rapport à un niveau de référence choisi P_{Max} qui représente la valeur maximale de la puissance reçue PMj par les (six) antennes Aj d'un même ensemble quelles que soient les valeurs des angles φ et ψ*.* Une autre normalisation possible consiste, par exemple, à déterminer la norme 2 du vecteur des puissances mesurées sur chaque antenne et à diviser les mesures de puissances brutes (c'est-à-dire reçues et non traitées) par la valeur de cette norme 2 du vecteur des puissances mesurées. Dans ce cas, le vecteur des puissances reçues, mesurées sur chaque antenne puis normalisé par le module de traitement MT, et les vecteurs de puissances reçues, tabulées dans les moyens de mémorisation BD en fonction de l'axe à vue, ont alors tous une norme 2 égale à 1.

Chaque ensemble de données cartographiques, stocké dans les moyens de mémorisation BD, est construit à partir d'ensembles de diagrammes de puissance (préalablement déterminés), du type de ceux illustrés sur les figures 5 à 8. En présence de puissances normalisées, chaque ensemble de données cartographiques est représentatif de puissances normalisées par exemple par rapport au niveau de référence P_{Max}, ou bien par rapport à la norme 2 du vecteur des puissances (comme indiqué ci-avant).

Tout type de moyen de mémorisation BD peut être envisagé, et notamment une mémoire ou une base de données.

Par ailleurs, dans l'exemple non limitatif illustré sur la figure 2, les moyens de mémorisation BD sont implantés dans le module de traitement MT. Mais cela n'est pas obligatoire.

Le module de traitement MT est chargé de comparer chaque ensemble de mesures de puissance, délivré par le premier sous-module de mesure M1, aux ensembles de données cartographiques qui sont stockés dans les moyens de mémorisation BD. Cette comparaison est destinée à estimer chaque direction de transmission (ou axe à vue) AVi' des signaux reçus par les antennes Aj et provenant des autres satellites Si' du groupe, par rapport à un référentiel (X, Y, Z) attaché au satellite Si, du type de celui illustré sur la figure 4. Ce référentiel est par exemple attaché au centre de gravité O du satellite Si, mais cela n'est pas obligatoire.

En fait, chaque fois que le module de traitement MT reçoit un ensemble de mesures de puissance, en provenance du premier sous-module de mesure M1, il commence par normaliser les puissances mesurées de l'ensemble reçu en utilisant une technique identique à celle utilisée lors du calcul et du stockage des données cartographiques.

Plus précisément, le module de traitement MT analyse les mesures de puissance de chaque ensemble de puissances, délivré par le premier sous-module de mesure M1, afin de déterminer, par exemple, la puissance maximale au sein de cet ensemble. Cette puissance maximale est alors considérée comme la puissance (ou le niveau) de référence de la mesure. Ensuite, le module de traitement MT applique aux signaux reçus (en provenance d'un même engin spatial), pendant une durée choisie, un gain qui est choisi de manière à normaliser les puissances des signaux reçus par rapport au niveau de référence.

Puis, le module de traitement MT recherche parmi les ensembles de données cartographiques stockés celui ou ceux qui correspond(ent) le mieux à cet ensemble reçu. Puis, soit il interpole dans l'ensemble des données cartographiques l'ensemble de mesures de puissances reçues normalisées, soit il identifie le vecteur des puissances reçues, tabulé dans les données cartographiques, le plus proche de l'ensemble des mesures de puissances reçues normalisées, pour en déduire une estimation des coordonnées de l'axe à vue AVi'. Le module de traitement MT détermine ainsi pour son satellite Si l'axe à vue AVi' correspondant à chaque satellite Si' distant.

Afin de permettre la différenciation des signaux émis par les différents satellites distants Si' deux solutions peuvent être envisagées.

Une première solution consiste à attribuer à chaque satellite Si d'un groupe une fréquence d'émission propre et à l'équiper d'antennes Aj multifréquences. Dans ce cas, qui correspond à un multiplexage fréquentiel, chaque premier sous-module de mesure M1 constitue chaque ensemble de mesures de puissance en regroupant les signaux qui sont issus des antennes Aj de l'ensemble et qui présentent une même fréquence (associée à un satellite distant Si').

Une deuxième solution consiste à attribuer à chaque engin spatial Si un code pseudo-aléatoire propre. Dans ce cas, qui correspond à un multiplexage par code, chaque premier sous-module de mesure M1 constitue chaque ensemble de mesures de puissances en regroupant les signaux qui sont issus des antennes Aj de l'ensemble et qui présentent un même code (associé à un satellite distant Si').

Une troisième solution consiste à mettre en oeuvre un multiplexage temporel au sein du groupe de satellites Si. Plus précisément, on attribue à chaque satellite Si une tranche temporelle pendant laquelle il est le seul à être autorisé à émettre ses signaux RF à destination des autres satellites, conformément à un schéma choisi. Par exemple, en présence de trois satellites S1 à S3, on attribue une première tranche temporelle d'émission TE1 au premier satellite S1, une deuxième tranche temporelle d'émission TE2 au deuxième satellite S2, venant juste après la première tranche temporelle d'émission TE1, et une troisième tranche temporelle d'émission TE3 au troisième satellite S3, venant juste après la deuxième tranche temporelle d'émission TE2 et juste avant la première tranche temporelle d'émission TE1 de la période suivante.

Durant les tranches temporelles d'émission TEi' pendant lesquelles un satellite Si n'émet pas, il dispose d'une tranche temporelle de réception TRi égale à la somme des tranches temporelles d'émission TEi' des autres satellites Si'.

Dans cet exemple de réalisation (à multiplexage temporel), il est avantageux que le dispositif de contrôle D comprenne un module de contrôle MC chargé tout d'abord de découper les tranches temporelles d'émission TEi et de réception TRi attribuées à son satellite Si en des nombres Nij de sous-tranches d'émission TEij et de sous-tranches de réception TRij chacun égaux au nombre d'antennes d'émission/réception Aj (et éventuelle(s) complémentaire(s)) de son satellite Si.

Le module de contrôle MC est ensuite chargé d'attribuer, d'une part, une sous-tranche d'émission TEij à chaque antenne d'émission/réception Aj de son dispositif de contrôle D, en fonction d'un premier ordonnancement choisi, et d'autre part, une sous-tranche de réception TRij à chacune des antennes d'émission/réception (et éventuelle(s) antenne(s) de réception complémentaire(s)) en fonction d'un second ordonnancement choisi.

Ainsi, chaque antenne d'émission/réception Aj est autorisée, d'une part, à émettre pendant la sous-tranche d'émission TEij qui lui a été attribuée, et d'autre part, à recevoir pendant la sous-tranche de réception TRij qui lui a été attribuée. De la sorte, chaque ensemble de puissances qui est délivré par le premier sous-module de mesure M1 concerne des signaux qui ont été reçus par les différentes antennes Aj pendant leurs sous-tranches de réception TRij respectives.

Le module de contrôle MC peut fixer les premier et second ordonnancements des sous-tranches d'émission TEij et de réception TRij de façon définitive.

Cela est bien adapté à un schéma de répartition temporelle à l'émission dans lequel chaque engin spatial Si émet sur toutes ses antennes simultanément.

Cependant, l'émission simultanée sur plusieurs antennes peut dégrader certaines directions d'axe à vue si les antennes ont des diagrammes de rayonnement qui ne sont pas complètement exclusifs. Afin d'éviter ce défaut, il est possible de choisir un schéma de répartition temporelle à l'émission dans lequel chaque engin spatial Si émet successivement sur ces différentes antennes.

Dans ce cas, il n'est pas possible de mesurer simultanément la puissance reçue par les différentes antennes d'un engin spatial Si et émise par une même antenne d'un autre engin spatial Si'. En effet, si la sous-tranche de temps allouée au second engin spatial pour l'émission sur son antenne n°1 coïncide avec la sous-tranche de temps allouée au premier engin spatial pour la réception sur son antenne n°**1**, elle ne peut pas coïncider avec la sous-tranche allouée au premier engin spatial sur une autre antenne de réception. Cette autre antenne de réception a en effet une sous-tranche qui coïncide avec celle d'une autre antenne du second engin spatial. Il est donc avantageux de faire évoluer dans le temps l'ordonnancement des sous-tranches affectées aux différentes antennes de réception de l'engin spatial, afin de collecter de façon séquentielle toutes les mesures de puissance.

On peut envisager de faire varier chaque ordonnancement périodiquement, par exemple toutes les 5 ou 10 secondes.

Lorsque le module de traitement MT est en possession des coordonnées d'un axe à vue AVi', il peut éventuellement déterminer la distance qui sépare son satellite Si du satellite Si' suivant cet axe à vue AVi'.

Pour ce faire, le dispositif de contrôle D doit comprendre, de préférence dans son premier module de mesure MM, un second sous-module de mesure M2. Ce dernier est plus précisément chargé d'estimer chaque distance séparant son satellite Si d'un autre satellite Si' du même groupe à partir au moins des signaux RF reçus par chacune des antennes Aj et provenant de cet autre satellite Si'.

En raison des biais temporels introduits par l'absence de synchronisation de haute précision entre les horloges H des satellites Si du groupe, chaque second sous-module de mesure M2 effectue de préférence son estimation de distance à partir non seulement des signaux RF qui sont reçus par chacune des antennes Aj et provenant d'un autre satellite Si', mais également de signaux auxiliaires qui sont transmis par cet autre satellite Si'.

Ces signaux auxiliaires consistent préférentiellement en une modulation de la porteuse du signal au moyen d'un code pseudo-aléatoire choisi, ainsi qu'éventuellement de données d'informations, afin que le signal émis soit l'image du temps local de l'engin spatial émetteur Si' et que l'observation de ce signal permette à l'engin spatial récepteur Si d'obtenir une mesure de pseudo-distance.

En confrontant sa propre mesure de pseudo-distance à celle transmise par un engin spatial (par exemple S2) sous forme de données d'information dans les signaux auxiliaires, le second sous-module de mesure M2 d'un autre engin spatial (par exemple S1) peut isoler le biais d'horloge et connaître la distance inter-engins spatiaux d(S1, S2). En effet, la distance vraie est égale à la demi-somme de la pseudo-distance mesurée par l'engin spatial S1 sur le premier signal émis par l'engin spatial S2 et de la pseudo-distance mesurée par l'engin spatial S2 sur le premier signal émis par l'engin spatial S1.

Le second sous-module de mesure M2 d'un satellite Si transmet ensuite la valeur déterminée de la distance inter-engins spatiaux d(Si, Si') au module de traitement MT.

Connaissant une distance inter-satellites d(Si, Si') et l'estimée de l'axe à vue correspondant AVi', le module de traitement MT peut alors déterminer les positions relatives des deux satellites concernés (Si et Si') par rapport à un référentiel choisi, par exemple le référentiel (X, Y, Z) qui est attaché au satellite Si (ou bien tout autre référentiel).

Chaque module de traitement MT peut ainsi déterminer les positions relatives de chaque satellite Si' du groupe par rapport à son propre satellite Si.

Le second sous-module de mesure M2 peut éventuellement mettre en oeuvre une fonction de filtrage destinée à lui permettre de déterminer les vitesses relatives des autres satellites Si' par rapport au satellite Si dans lequel il est implanté, à partir des positions relatives de chaque satellite Si' par rapport audit satellite Si.

Comme cela est illustré sur la figure 2 à titre d'exemple non limitatif, le dispositif de contrôle D peut également comprendre un module d'analyse MA chargé de détecter des risques de collision avec d'autres satellites Si' du groupe à partir des positions relatives de ces satellites Si', qu'il a précédemment déterminées. Tout type de détection de risque de collision connu de l'homme de l'art peut être mis en oeuvre à ce stade.

Chaque fois qu'il détecte un risque de collision, le module d'analyse MA peut également et éventuellement déterminer une manoeuvre d'évitement pour son satellite Si en fonction des positions relatives des autres satellites Si' du groupe. Dans ce cas, le module d'analyse MA adresse des instructions définissant cette manoeuvre d'évitement au module de contrôle MD du satellite Si, qui est en charge du positionnement de ce dernier. Il s'agit par exemple d'agir sur une ou plusieurs tuyères, ou tout autre actionneur permettant le contrôle de l'attitude et de la trajectoire des satellites.

Le module d'analyse MA ou un module de contrôle additionnel peut être également agencé de manière à contrôler le retour de la formation à une géométrie nominale, à partir des conditions géométriques et cinématiques obtenues après une manoeuvre d'évitement de collision et après retour à des conditions saines sur tous les satellites.

Le dispositif de contrôle D selon l'invention, et notamment son module de traitement MT, son module de mesure MM, et ses éventuels module de contrôle MC et module d'analyse MA, peuvent être réalisés sous la forme de circuits électroniques, de modules logiciels (ou informatiques), ou d'une combinaison de circuits et de logiciels.

Au sein du dispositif de contrôle D, le module de mesure MM, les modules d'aiguillage C1 et C2, le module de pré-traitement MP, le module de formation de faisceau MF, ainsi qu'éventuellement le module de contrôle MC, peuvent être réunis dans une entité constituant un senseur SR.

L'invention ne se limite pas aux modes de réalisation de dispositif de contrôle et d'engin spatial décrits ci-avant, seulement à titre d'exemple, mais

## Revendications

1. Dispositif de contrôle (D), pour un engin spatial (Si) d'un groupe d'engins spatiaux destiné à se déplacer selon une formation choisie, comprenant un ensemble d'au moins trois antennes d'émission/réception (Aj) implantées sur au moins trois faces d'orientations différentes dudit engin spatial (Si) et propres à émettre/recevoir des signaux radiofréquences, et des moyens de traitement (MT) agencés pour estimer les directions de transmission des signaux émis par les autres engins spatiaux (Si') du groupe à partir desdits signaux reçus par lesdites antennes (Aj), **caractérisé en ce qu'**il comprend :
- des moyens de contrôle (MC) agencés pour attribuer, à chaque antenne d'émission/réception, des tranches d'émission différentes et des tranches de réception différentes suivant un schéma de répartition temporelle dans lequel les antennes n'émettent pas simultanément,
- des premiers moyens de mesure (M1) agencés pour déterminer la puissance des signaux reçus par chacune desdites antennes (Aj) et délivrer des ensembles de puissances associés chacun à l'un desdits autres engins spatiaux (Si') du groupe,
- et des moyens de mémorisation (BD) propres à stocker des ensembles de données cartographiques représentatifs chacun des puissances des signaux reçus par chacune desdites antennes (Aj) en fonction de directions de transmission choisies,
- et **en ce que** lesdits moyens de traitement (MT) sont agencés pour comparer chaque ensemble de puissances délivré par lesdits premiers moyens de mesure (M1) auxdits ensembles de données cartographiques stockés de manière à estimer chaque direction de transmission des signaux émis par les autres engins spatiaux (Si') du groupe par rapport à un référentiel attaché audit engin spatial (Si).

2. Dispositif selon la revendication 1, **caractérisé en ce que** lesdits moyens de mémorisation (BD) sont agencés pour stocker des ensembles de données cartographiques représentatifs de puissances normalisées par rapport à un niveau de référence, et **en ce que** lesdits moyens de traitement (MT) sont agencés pour analyser lesdites puissances de chaque ensemble de puissances délivré par lesdits premiers moyens de mesure (M1) afin de déterminer une puissance de référence, et pour appliquer aux signaux reçus en provenance d'un même engin spatial (Si'), pendant une durée choisie, un gain choisi de manière à normaliser les puissances desdits signaux reçus par rapport à ladite puissance de référence.

3. Dispositif selon l'une des revendications 1 et 2, **caractérisé en ce que** lesdits premiers moyens de mesure (M1) sont agencés pour effectuer des mesures de rapport signal à bruit pour chacun desdits signaux reçus afin de déterminer la puissance de chaque signal reçu.

4. Dispositif selon l'une des revendications 1 à 3, **caractérisé en ce que** les moyens de contrôle (MC) sont agencés pour, en cas d'attribution d'une tranche temporelle d'émission et d'une tranche temporelle de réception complémentaires à chaque engin spatial dudit groupe, conformément à un schéma choisi, pour découper les tranches temporelles d'émission et de réception attribuées à leur engin spatial (Si) en des nombres de sous-tranches d'émission et de sous-tranches de réception chacun égaux au nombre d'antennes d'émission/réception (Aj) de leur engin spatial (Si), et à attribuer des sous-tranches d'émission différentes à chacune desdites antennes d'émission/réception (Aj) selon un premier ordonnancement choisi et des sous-tranches de réception différentes à chacune desdites antennes d'émission/réception (Aj) selon un second ordonnancement choisi, chaque antenne d'émission/réception (Aj) étant alors autorisée à émettre pendant la sous-tranche d'émission qui lui a été attribuée et à recevoir pendant la sous-tranche de réception qui lui a été attribuée, et chaque ensemble de puissances délivré portant sur des signaux reçus par lesdites antennes d'émission/réception (Aj) pendant leurs sous-tranches de réception respectives.

5. Dispositif selon la revendication 4, **caractérisé en ce que** lesdits moyens de contrôle (MC) sont agencés pour faire varier ledit premier ordonnancement choisi et/ou ledit second ordonnancement choisi.

6. Dispositif selon l'une des revendications 1 à 5, **caractérisé en ce qu'**il comprend des seconds moyens de mesure (M2) agencés pour estimer chaque distance séparant leur engin spatial de l'un desdits autres engins spatiaux (Si') du groupe à partir au moins desdits signaux reçus par chacune desdites antennes (Aj), et **en ce que** lesdits moyens de traitement (MT) sont agencés pour déterminer les positions relatives des engins spatiaux dudit groupe par rapport à un référentiel choisi à partir desdites distances estimées et desdites directions de transmission de signaux estimées.

7. Dispositif selon la revendication 6, **caractérisé en ce que** lesdits seconds moyens de mesure (M2) sont agencés pour estimer chaque distance séparant leur engin spatial (Si) de l'un desdits autres engins spatiaux (Si') du groupe à partir desdits signaux reçus par chacune desdites antennes (Aj) et de signaux auxiliaires transmis par lesdits autres engins spatiaux (Si') du groupe et représentatifs de mesures de distance correspondantes entre eux (Si') et ledit engin spatial (Si).

8. Dispositif selon l'une des revendications 6 et 7, **caractérisé en ce qu'**il comprend des moyens d'analyse (MA) agencés pour détecter des risques de collision à partir desdites positions relatives des engins spatiaux dudit groupe.

9. Dispositif selon la revendication 8, **caractérisé en ce que** lesdits moyens d'analyse (MA) sont agencés, en cas de détection d'un risque de collision, pour déterminer une manoeuvre d'évitement dudit engin spatial (Si) en fonction desdites positions relatives des autres engins spatiaux (Si') dudit groupe.

10. Dispositif selon la revendication 9, **caractérisé en ce qu'**il comprend des moyens de contrôle agencés, après une manoeuvre d'évitement de collision, pour déterminer des manoeuvres de reconfiguration nominale des engins spatiaux (Si) dudit groupe en fonction de leurs positions relatives après ladite manoeuvre d'évitement de collision.

11. Dispositif selon l'une des revendications 1 à 10, **caractérisé en ce que** lesdites antennes d'émission/réception (Aj) sont propres à émettre et/ou recevoir des signaux radiofréquences se présentant sous la forme d'une porteuse modulée par des codes pseudo-aléatoires choisis.

12. Dispositif selon l'une des revendications 1 à 11, **caractérisé en ce que** lesdites antennes d'émission/réception (Aj) sont agencées pour émettre/recevoir des porteuses présentant une fréquence appartenant à une bande de fréquences choisie dans un groupe comprenant les bandes S, SHF et EHF.

13. Dispositif selon la revendication 12, **caractérisé en ce que** ladite bande de fréquence est la bande S.

14. Engin spatial (Si) destiné à se déplacer en formation au sein d'un groupe d'engins spatiaux du même type, **caractérisé en ce qu'**il comprend un dispositif de contrôle (D) selon l'une des revendications précédentes.

## Claims

1. A control device (D) for a spacecraft (Si) in a group of spacecraft that is designed to move in a selected formation, comprising a set of at least three transmission/reception antennae (Aj) installed on at least three different orientation faces of said spacecraft (Si) and designed to transmit/receive radiofrequency signals, and processing means (MT) that are arranged so as to estimate the transmission directions of the signals transmitted by the other spacecraft (Si') of the group on the basis of said signals received by said antennae (Aj), **characterised in that** it comprises:
- control means (MC) that are arranged so as to assign different transmission slots and different reception slots to each transmission/reception antenna according to a time division scheme in which the antennae do not transmit simultaneously;
- first measuring means (M1) that are arranged so as to determine the power of the signals received by each of said antennae (Aj) and delivering sets of powers that are each associated with one of said other spacecraft (Si') of the group;
- and storing means (BD) that are designed to store sets of cartographic data that each represent powers of the signals received by each of said antennae (Aj) as a function of selected directions of transmission;
- and **in that** said processing means (MT) are arranged so as to compare each set of powers delivered by said first measuring means (M1) to said sets of stored cartographic data so as to estimate each direction of transmission of the signals transmitted by the other spacecraft (Si') of the group relative to a reference that is attached to said spacecraft (Si).

2. The device according to claim 1, **characterised in that** said storing means (BD) are arranged so as to store sets of cartographic data that represent powers that are normalised relative to a reference level, and **in that** said processing means (MT) are arranged so as to analyse said powers of each set of powers delivered by said first measuring means (M1) so as to determine a reference power, and to apply a gain to the signals received from the same spacecraft (Si'), during a selected duration, which gain is selected so as to normalise the powers of said received signals relative to said reference power.

3. The device according to claim 1 or 2, **characterised in that** said first measuring means (M1) are arranged so as to carry out signal-to-noise ratio measurements for each of said received signals so as to determine the power of each received signal.

4. The device according to any one of claims 1 to 3, **characterised in that** said control means (MC) are arranged, in the case of the assignment of an additional transmission time slot and reception time slot to each spacecraft of said group, in accordance with a selected scheme, so as to divide the transmission and reception time slots that are assigned to their spacecraft (Si) into numbers of transmission and reception sub-slots that are each equal to the number of transmission/reception antennae (Aj) of their spacecraft (Si), and so as to assign different transmission sub-slots to each of said transmission/reception antennae (Aj) according to a first selected sequence and different reception sub-slots to each of said transmission/reception antennae (Aj) according to a second selected sequence, each transmission/reception antenna (Aj) then being authorised to transmit during the transmission sub-slot that has been assigned thereto and to receive during the reception sub-slot that has been assigned thereto, wherein each set of delivered powers relates to signals received by said transmission/reception antennae (Aj) during their respective reception sub-slots.

5. The device according to claim 4, **characterised in that** said control means (MC) are arranged so as to vary said first selected sequence and/or said second selected sequence.

6. The device according to any one of claims 1 to 5, **characterised in that** it comprises second measuring means (M2) that are arranged so as to estimate each distance that separates their spacecraft from one of said other spacecraft (Si') of the group on the basis of at least said signals received by each of said antennae (Aj), and **in that** said processing means (MT) are arranged so as to determine the relative positions of said spacecraft of said group relative to a reference that is selected on the basis of said estimated distances and said estimated signal transmission directions.

7. The device according to claim 6, **characterised in that** said second measuring means (M2) are arranged so as to estimate each distance that separates their spacecraft (Si) from one of said other spacecraft (Si') of the group on the basis of said signals received by each of said antennae (Aj) and of auxiliary signals that are transmitted by said other spacecraft (Si') of the group and which represent corresponding distance measurements with each of said other spacecraft (Si') and said spacecraft (Si).

8. The device according to claim 6 or 7, **characterised in that** it comprises analysis means (MA) that are arranged so as to detect collision risks on the basis of said relative positions of said spacecraft of said group.

9. The device according to claim 8, **characterised in that** said analysis means (MA) are arranged, in the event of the detection of a collision risk, so as to determine an avoidance manoeuvre of said spacecraft (Si) as a function of said relative positions of said other spacecraft (Si') of said group.

10. The device according to claim 9, **characterised in that** it comprises control means that are arranged, after a collision avoidance manoeuvre, so as to determine nominal reconfiguration manoeuvres of said spacecraft (Si) of said group as a function of their relative positions after said collision avoidance manoeuvre.

11. The device according to any one of claims 1 to 10, **characterised in that** said transmission/reception antennae (Aj) are designed to transmit and/or receive radiofrequency signals in the form of a carrier that is modulated by selected pseudorandom codes.

12. The device according to any one of claims 1 to 11, **characterised in that** said transmission/reception antennae (Aj) are arranged so as to transmit/receive carriers with a frequency that belongs to a frequency band that is selected from a group that comprises the S, SHF and EHF bands.

13. The device according to claim 12, **characterised in that** said frequency band is the S band.

14. A spacecraft (Si) that is designed to move in formation within a group of spacecraft of the same type, **characterised in that** it comprises a control device (D) according to any one of the preceding claims.

## Patentansprüche

1. Steuervorrichtung (D) für ein Raumfahrzeug (Si) in einer Gruppe von Raumfahrzeugen, die sich in einer gewählten Formation bewegen sollen, die einen Satz von wenigstens drei Sende-/Empfangsantennen (Aj), die auf wenigstens drei verschiedenen Orientierungsflächen des Raumfahrzeugs (Si) installiert sind und die Aufgabe haben, Funkfrequenzsignale zu senden/empfangen, und Verarbeitungsmittel (MT) zum Schätzen der Senderichtungen der von den anderen Raumfahrzeugen (Si') der Gruppe ausgestrahlten Signale anhand der von den Antennen (Aj) empfangenen Signale umfasst, **dadurch gekennzeichnet, dass** sie Folgendes umfasst:
- Steuermittel (MC), um jeder Sende-/Empfangsantenne verschiedene Sendezeitschlitze und verschiedene Empfangszeitschlitze gemäß einem zeitlichen Verteilungsschema zuzuordnen, in dem die Antennen nicht gleichzeitig senden,
- erste Messmittel (M1) zum Ermitteln der Leistung der von jeder der Antennen (Aj) empfangenen Signale und zum Liefern von mit jedem der anderen Raumfahrzeuge (Si') der Gruppe assoziierten Leistungssätzen,
- und Speichermittel (BD) zum Speichern von Sätzen von kartografischen Daten, die jeweils für Leistungen der von den einzelnen Antennen (Aj) empfangenen Signalen repräsentativ sind, in Abhängigkeit von den gewählten Senderichtungen,
- und dadurch, dass die Verarbeitungsmittel (MT) zum Vergleichen jedes Satzes von von den ersten Messmitteln (M1) gelieferten Leistungen mit den Sätzen von gespeicherten kartografischen Daten ausgelegt sind, um jede Senderichtung der von den anderen Raumfahrzeugen (Si') der Gruppe ausgestrahlten Signale in Bezug auf eine an dem Raumfahrzeug (Si) angebrachte Referenz zu schätzen.

2. Vorrichtung nach Anspruch 1, **dadurch gekennzeichnet, dass** die Speichermittel (BD) die Aufgabe haben, Sätze von kartografischen Daten zu speichern, die für mit Bezug auf ein Referenzniveau normalisierte Leistungen repräsentativ sind, und dadurch, dass die Verarbeitungsmittel (MT) die Aufgabe haben, die Leistungen jedes von den ersten Messmitteln (M1) gelieferten Leistungssatzes zu analysieren, um eine Referenzleistung zu ermitteln, und eine Verstärkung auf die vom selben Raumfahrzeug (Si') kommenden empfangenen Signale während einer gewählten Periode anzuwenden, wobei die Verstärkung so gewählt ist, dass die Leistungen der empfangenen Signale in Bezug auf die Referenzleistung normalisiert werden.

3. Vorrichtung nach einem der Ansprüche 1 und 2, **dadurch gekennzeichnet, dass** die ersten Messmittel (M1) die Aufgabe haben, Signal-Rausch-Verhältnismessungen für jedes der empfangenen Signale durchzuführen, um die Leistung jedes empfangenen Signals zu ermitteln.

4. Vorrichtung nach einem der Ansprüche 1 bis 3, **dadurch gekennzeichnet, dass** die Steuermittel (MC) die folgenden Aufgaben haben: im Falle der Zuordnung eines zusätzlichen Sendezeitschlitzes und Empfangszeitschlitzes zu jedem Raumfahrzeug der Gruppe, gemäß einem gewählten Schema, Unterteilen der ihrem Raumfahrzeug (Si) zugeordneten Sende- und Empfangszeitschlitze in eine Zahl von Sende- und Empfangssubteilschlitze, die jeweils gleich der Zahl der Sende-/Empfangsantennen (Aj) ihres Raumfahrzeugs (Si) sind, und Zuordnen der verschiedenen Sendesubteilschlitze zu den Sende-/Empfangsantennen (Aj) gemäß einer gewählten ersten Reihenfolge und der verschiedenen Empfangssubteilschlitze zu jeder der Sende-/Empfangsantennen (Aj) gemäß einer zweiten gewählten Reihenfolge, wobei jede Sende-/Empfangsantenne (Aj) somit autorisiert ist, innerhalb des ihr zugeordneten Sendesubteilschlitzes zu senden und innerhalb des ihr zugeordneten Empfangssubteilschlitzes zu empfangen, wobei sich jeder gelieferte Leistungssatz auf von den Sende-/Empfangsantennen (Aj) innerhalb ihrer jeweiligen Empfangssubteilschlitze empfangene Signale bezieht.

5. Vorrichtung nach Anspruch 4, **dadurch gekennzeichnet, dass** die Steuermittel (MC) die Aufgabe haben, die erste gewählte Reihenfolge und/oder die zweite gewählte Reihenfolge zu variieren.

6. Vorrichtung nach einem der Ansprüche 1 bis 5, **dadurch gekennzeichnet, dass** sie zweite Messmittel (M2) zum Schätzen jedes Abstands, der ihr Raumfahrzeug von einem der anderen Raumfahrzeuge (Si') der Gruppe trennt, anhand von wenigstens zwei empfangenen Signalen für jede der Antennen (Aj) umfasst, und dadurch, dass die Verarbeitungsmittel (MT) die Aufgabe haben, die relativen Positionen der Raumfahrzeuge der Gruppe in Bezug auf eine gewählte Referenz auf der Basis der geschätzten Abstände und der geschätzten Signalübertragungsrichtungen zu ermitteln.

7. Vorrichtung nach Anspruch 6, **dadurch gekennzeichnet, dass** die zweiten Messmittel (M2) die Aufgabe haben, jeden Abstand, der ihr Raumfahrzeug (Si) von einem anderen der Raumfahrzeuge (Si') der Gruppe trennt, anhand der empfangenen Signale für jede der Antennen (Aj) und von Zusatzsignalen zu schätzen, die von den anderen Raumfahrzeugen (Si') der Gruppe gesendet wurden und entsprechende Abstandsmessungen zwischen ihnen (Si') und dem Raumfahrzeug (Si) repräsentieren.

8. Vorrichtung nach einem der Ansprüche 6 und 7, **dadurch gekennzeichnet, dass** sie Analysemittel (MA) zum Detektieren von Kollisionsrisiken anhand der relativen Positionen der Raumfahrzeuge der Gruppe umfasst.

9. Vorrichtung nach Anspruch 8, **dadurch gekennzeichnet, dass** die Analysemittel (MA) die Aufgabe haben, im Falle einer Detektion eines Kollisionsrisikos ein Ausweichmanöver des Raumfahrzeugs (Si) in Abhängigkeit von den relativen Positionen der anderen Raumfahrzeuge (Si') der Gruppe zu ermitteln.

10. Vorrichtung nach Anspruch 9, **dadurch gekennzeichnet, dass** sie Steuermittel umfasst, um nach einem Kollisionsausweichmanöver nominelle Umkonfigurationsmanöver für die Raumfahrzeuge (Si) der Gruppe in Abhängigkeit von ihren relativen Positionen nach dem Kollisionsausweichmanöver zu ermitteln.

11. Vorrichtung nach einem der Ansprüche 1 bis 10, **dadurch gekennzeichnet, dass** die Sende-/Empfangsantennen (Aj) die Aufgabe haben, Funkfrequenzsignale zu senden und/oder zu empfangen, die in Form eines durch gewählte pseudozufällige Codes modulierten Trägers vorliegen.

12. Vorrichtung nach einem der Ansprüche 1 bis 11, **dadurch gekennzeichnet, dass** die Sende-/Empfangsantennen (Aj) die Aufgabe haben, Träger zu senden/empfangen, die eine Frequenz aufweisen, die zu einem Frequenzband gehören, das aus der Gruppe bestehend aus den S-, SHF- und EHF-Bändern ausgewählt ist.

13. Vorrichtung nach Anspruch 12, **dadurch gekennzeichnet, dass** das Frequenzband das S-Band ist.

14. Raumfahrzeug (Si) zum Bewegen in Formation innerhalb einer Gruppe von Raumfahrzeugen desselben Typs, **dadurch gekennzeichnet, dass** es eine Steuervorrichtung (D) nach einem der vorherigen Ansprüche umfasst.
